(19) Europäisches Patentamt
European Patent Office
Office européen des brevets

(11) **EP 4 382 737 A1**

(12) **EUROPEAN PATENT APPLICATION**

(43) Date of publication:
**12.06.2024 Bulletin 2024/24**

(21) Application number: **23214318.0**

(22) Date of filing: **05.12.2023**

(51) International Patent Classification (IPC):
**F02D 41/00** (2006.01)   **F02B 37/18** (2006.01)
**F02D 9/02** (2006.01)

(52) Cooperative Patent Classification (CPC):
**F02D 41/0007; F02B 37/18; F02D 9/02;**
F02D 2200/0406; F02D 2250/22

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.12.2022   IT 202200025251**

(71) Applicant: **FPT Industrial S.p.A.**
**10156 Torino (IT)**

(72) Inventors:
• **RAMUNDO, Fabio**
  **10156 Torino (IT)**
• **CANGEMI, Tommaso**
  **10156 Torino (IT)**
• **RODRIGUEZ, Raul**
  **10156 Torino (IT)**

(74) Representative: **Fiume, Orazio et al**
**Praxi Intellectual Property S.p.A.**
**Corso Vittorio Emanuele II, 3**
**10125 Torino (IT)**

(54)   **SYSTEM AND METHOD FOR FUEL CONTROL OF A SUPERCHARGED OTTO CYCLE ENGINE**

(57)    Method of controlling the power supply of a supercharged Otto (E) cycle engine by means of a turbocharger (TC) comprising a turbine (TB) arranged on an exhaust manifold (EM) of the engine and equipped with a wastegate valve (WG) arranged for bypassing the turbine, an intake manifold (IM) operatively connected with a compressor (C) of the turbocharger, a throttle valve (TV) disposed on the intake manifold for controlling an intake pressure downstream of the throttle valve, the method comprising a first procedure, when the turbocharger is judged operational, comprising: the complete opening of the throttle valve and the control of the intake pressure by means of an adjustment of the wastegate valve.

Fig. 4

## Description

### Field of the invention

The present invention relates to the field of Otto cycle spark ignition engines, and in particular to a supercharged engine in which the turbine is equipped with a wastegate valve.

### State of the art

Wastegate valves are pressure relief valves implemented to partially bypass the turbine, so as to prevent it from exceeding a predetermined rotation speed, beyond which the turbine can be damaged. Furthermore, the Wastegate is used to indirectly control the compressor driven in rotation by the turbine.

Wastegate control for spark ignition engines is a topic of significant technical importance, as it has a significant impact on the overall operation of the engine. The throttling of the WG determines a greater enthalpy flow towards the turbine, which consequently leads to an increase in the rotation speed of the turbine and therefore of the compressor through the shared shaft and which determines, in turn, as a result, an increase in the pressure in the intake manifold and precisely upstream of the throttle valve.

Furthermore, it is known that the throttle valve develops the function of regulating the amount of air it is desired to trap in the cylinders. This fact further complicates the control of the Wastegate.

In spark ignition engines, the engine fuel supply must be stoichiometric, therefore, the regulation of the amount of air trapped in the cylinders must be accurate.

It is clear that the quantity of air trapped in the cylinders depends not only on the rotation speed of the engine and other factors, but also on the pressure in the intake manifold, downstream of the throttle valve and on the volumetric efficiency of the engine at the working point considered.

The pressure at the intake manifold downstream of the throttle valve is the main tool with which to control the desired amount of air in the cylinders.

For convenience, "intake pressure" is defined as the pressure downstream of the throttle valve considering the circulation of air in the manifold itself. Furthermore, "boost pressure" is defined as the pressure generated by the compressor which is established upstream of the throttle valve.

The pressure at the intake manifold is function of

- the boost pressure,
- the throttle valve adjustment and
- the engine rotation speed
- As well as any other actuators that can influence it.

In particular, it increases as the boost pressure increases and increases as the throttle valve opening increases, in the sense that the more the valve is open, the greater the pressure at the intake manifold.

It should be noted that boost pressure represents an upper limit for intake pressure to which the pressure drop over the throttle valve is subtracted. Therefore, once the maximum possible opening of the throttle valve has been reached, the possibility of increasing the air to be trapped in the cylinders depends exclusively on the boost pressure and therefore on the operating conditions of the engine and the Wastegate valve.

In naturally aspirated engines, the maximum pressure at the intake manifold, neglecting the losses over the throttle valve, coincides with the ambient pressure.

In supercharged engines, when the compressor is at very low rotation speed, for example because the engine is idling and the throttle valve is relatively little open, the boost pressure may be lower than the ambient pressure, because the compressor, rather than favouring the flow of air from the environment, itself represents a cause of pressure drop. By increasing the opening of the throttle valve and consequently the enthalpy through the turbine (obviously talking about a "firing" engine) the compressor will no longer constitute a pressure drop but will begin to raise the boost pressure which, neglecting pressure drop on the throttle valve, will constitute the intake pressure limit, which at this point will be greater than the ambient pressure.

Therefore, the need emerges to control the pressure at the manifold through the control of the throttle valve and the boost pressure through the wastegate valve.

However, according to the prior art the two controls are performed in a closed loop, but if not well designed, these can give rise to oscillations of the throttle valve position and consequently of the boost pressure, as the two controls are evidently interrelated. The implementation of state machines that bypass closed loop controllers, in predetermined operating conditions, is often used. The imposition of a logic that bypasses the closed loop controller often does not take into account physical models of the phenomena being controlled with the result that when some operating conditions vary the logic fails the control. Furthermore, it often happens that with these control schemes it is not possible to reach a correct pressure value at the intake manifold due to the pressure drop on the throttle valve, even when it is completely open.

A known solution involves deactivating the intake pressure control, completely opening the throttle valve, when the boost control is active. These solutions involve bypassing the throttle valve control. Therefore, control of intake pressure is achieved indirectly through control of boost pressure. However, to perform this indirect control it is necessary to perform a parameter transformation, i.e. to pass from the target intake pressure value to a corresponding target boost pressure value. But this transformation is far from reliable, as it is a highly nonlinear function.

This is advantageous, however the logic and methods with which this operation is performed are not optimal in all engine operating conditions.

Unless specifically excluded in the detailed description that follows, what is described in this chapter is to be considered as an integral part of the detailed description.

**Summary of the invention**

The aim of the present invention is to present a system and method for controlling the charging of a supercharged Otto cycle engine capable of solving the aforementioned problems.

The basic idea of the present invention is to control the wastegate valve by an error calculated directly as the difference between the signal representing the target pressure at the intake manifold and the signal representing the pressure measured at the intake manifold, when the compressor is judged operating.

By "operational", in relation to the compressor, it is meant that it is able to express a boost pressure higher than atmospheric pressure, preferably beyond a first predetermined threshold.

No transformation is required on the input signals to the controller.

Furthermore, the error is calculated on coherent signals, as both relate to the intake manifold.

As regards the controller that controls the throttle valve, it is not bypassed, but the complete opening of the valve is obtained through appropriate input signals designed to generate an error such as to induce the controller to operate the complete opening of the throttle valve.

Preferably, when the compressor is judged to be inoperative, i.e. it is not capable of expressing a boost pressure higher than atmospheric pressure, then the Wastegate valve controller operates as a function of a pressure error calculated as the difference between the signal representing the ambient pressure appropriately increased by a predetermined threshold and a signal representative of the measured boost pressure. Simultaneously, the throttle controller operates on an error function of the signal representing the target pressure and the pressure measured at the intake manifold. In other words, the two controls are operationally decoupled, contrary to what happens in the conditions in which the compressor is judged to be operational.

The "intake pressure" is measured by a pressure sensor located immediately downstream of the throttle valve, while the "boost pressure" is measured by a pressure sensor located immediately upstream of the throttle valve. This choice is optimal because it allows the layout of the intake ducts to be varied without interfering with the control system which is the object of the present invention.

According to a further preferred aspect of the invention, a so-called boost reserve may be required, i.e. an increase in the difference between the boost pressure and the intake pressure is desired, so as to have a quicker response of the engine when the accelerator pedal is depressed quickly. It is then required that the control of the amount of air trapped in the cylinders is carried out through the throttle valve rather than through the Wastegate valve. This control guarantees a particularly prompt response of the engine, although this affects the overall efficiency due to an increase in pressure drops on the throttle valve. In these conditions the boost controller operates as a function of an error given by the difference between the signal representing the target boost pressure and the measured boost pressure, while the intake pressure controller operates as a function of the error given by the difference between the signal representing the target pressure at the intake manifold and the signal representing the pressure measured at the intake manifold. Again, the two controllers are decoupled, but the signals on which the boost pressure controller operates are different.

The target boost pressure can be calculated in any known way to obtain the boost reserve.

It may be noted that the target boost pressure value is calculated only when the boost reserve is required and can be proportioned to the target pressure value at the intake manifold.

Instead, the target pressure value at the intake manifold is calculated in a known way based on the torque requested to the engine.

The dependent claims describe preferred variants of the invention, forming an integral part of the present description.

## Brief description of the figures

Further objects and advantages of the present invention will be clear from the following detailed description of an example of its implementation (and its variants) and from the attached drawings given purely for explanatory and non-limiting purposes, in which:

Fig. 1 shows a control scheme, according to a first operating condition, of the pressure at the intake manifold according to the present invention;

Fig. 2 shows a control scheme, according to a second operating condition, of the pressure at the intake manifold and boost;

Fig. 3 shows a control scheme, according to a third operating condition, of the pressure at the intake manifold and boost;

Fig. 4 shows a state diagram, in which the ON state represents the operating condition of the compressor operating, OFF the operating condition of the compressor not operating as described above and RESERVE the condition of the compressor operating to manage a boost reserve;

Fig. 5 shows schematically a supercharged Otto cycle engine implementing the present invention.

The same reference numbers and letters in the figures identify the same elements or components or functions.

It should also be noted that the terms "first", "second", "third", "higher", "lower" and the like may be used here to distinguish various elements. These terms do not imply a spatial, sequential, or hierarchical order for the modified elements unless specifically indicated or inferred from the text.

The elements and characteristics illustrated in the different preferred embodiments, including the drawings, can be combined with each other without departing from the scope of protection of the present application as described below.

## Detailed description

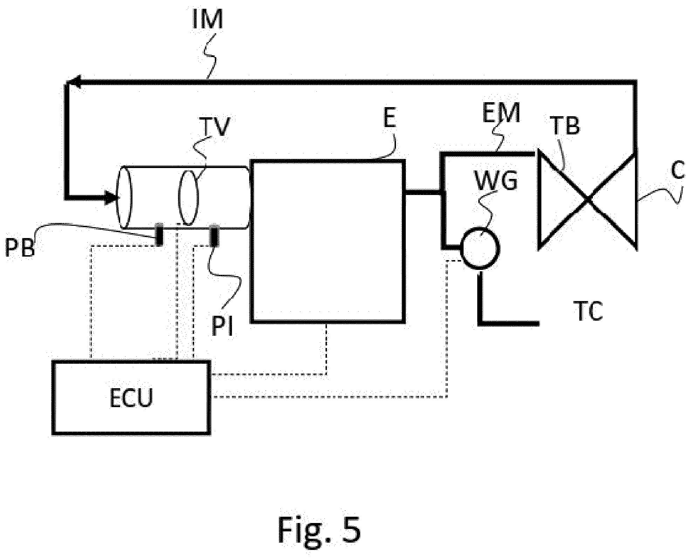

Fig. 5 shows an Otto cycle engine E equipped with an intake manifold IM on which a throttle valve TV is housed, and an exhaust manifold on which the turbine TB of a turbocharger TC is arranged.

The turbine is equipped with a wastegate valve WG arranged to allow a flow of exhausted gas expelled by the engine to bypass, at least partially, the turbine TB.

The turbine is arranged to drive a compressor C in rotation, which includes a relative outlet connected to the intake manifold IM upstream of the throttle valve TV, so as to supercharge the engine.

A pressure sensor PB is placed immediately upstream of the throttle valve to measure a "boost pressure" and a pressure sensor PI is placed immediately downstream of the throttle valve to measure a so-called "intake pressure".

An ECU processing unit receives signals from the above pressure sensors and other sensors including a sensor associated with the accelerator pedal (not shown) and accordingly controls the actuation of the throttle valve, wastegate valve and injectors (not shown) arranged to inject fuel into the cylinders and/or intake of each cylinder. The intake manifolds of the individual cylinders join together to form the single intake manifold IM on which the throttle valve is located.

Since this is a known hardware scheme, it is not necessary to describe further details.

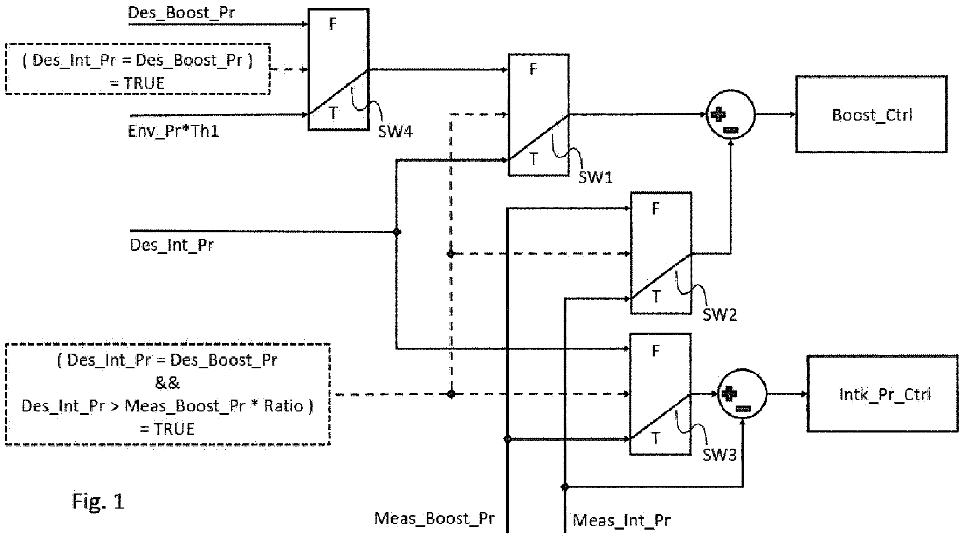

Figure 1 shows a control scheme with two controllers "Boost_Ctrl" and "Intk_Pr_Ctrl". They are configured to control the wastegate valve WG and the throttle valve TV respectively.

In particular, the first controller operates in such a way that a positive error leads the controller to close the wastegate valve, so as to determine an increase in the flow of exhausted gas passing through the turbocharger turbine. A negative error, on the other hand, induces the controller to open the wastegate valve, so as to increase the flow of exhausted gas which bypasses the turbocharger turbine.

The second controller Intk_Pr_Ctrl operates, however, in such a way that a positive error leads the controller to open the throttle valve, so as to determine an increase in air flow to the engine. This increase in flow determines an increase in pressure at the intake manifold. Vice versa, regarding a negative error.

According to the present invention, when the compressor is judged to be operational, the wastegate valve controller Boost_Ctrl receives as input the error calculated as the difference between the signal representing the target pressure at the intake manifold and the signal representing the pressure measured at the intake manifold. It is understood that it is not necessary to carry out any transformation or adaptation of the signals to obtain a corresponding error on the boost pressure.

The diagram shows four switches. A first switch SW1 allows selecting between two inputs, namely

- Env_Pr * Th1, i.e. the signal representing the ambient pressure preferably increased for a threshold Th1 greater than 1, and

- Des_Int_Pr, i.e. the signal representing the target pressure at the intake manifold.

A second switch SW2 allows you to select between two inputs, viz

- Meas_Boost_Pr, i.e. the measured boost pressure,
- Meas_Int_Pr, i.e. the intake pressure measured at the intake manifold.

The switches SW1 and SW2 are configured to switch between the conditions T and F which correspond to "true" and "false" respectively. The condition being verified, which allows the switches to select the signal to be directed to the difference node, is based on verification that the turbocharger is judged to be operational.

The verification is indicated in the bottom left box of figure 1:

$$\texttt{Des\_Int\_Pr > Meas\_Boost\_Pr * Ratio}$$

It indicates that the target pressure of the intake manifold, i.e. downstream of the throttle valve, is greater than the quantity Meas_Boost_Pr * Ratio, where Ratio is a selectable parameter close to unity but strictly lower than unity and greater than or equal to 0.95.

More specifically the measured boost pressure Meas_Boost_Pr, subtracting the drop CDP on the fully open throttle valve, under any operating condition, must be greater than the value determined by Meas_Boost_Pr * Ratio. For example, if the measured pressure value Meas_Boost_Pr is equal to 1000 mbar and the pressure drop across the fully open throttle valve, in an operating condition, is equal to 25 mbar, then (1000 - 25) > 1000 * Ratio, therefore

$$\texttt{0.95 <= Ratio < (1000-25) / 1000.}$$

Evidently, Ratio threshold must be selected so as to satisfy the upper limit (Meas_Boost_Pr - CDP)/Meas_Boost_Pr, in any engine operating condition.

When the target intake pressure is greater than the Meas_Boost_Pr * Ratio, then, the turbocharger is judged to be operational and the switches SW1 and SW2 are on T and appear as proposed in figure 1 and the controller Bost_Ctrl operates on the error between the signal representing the target intake pressure and the signal representing the intake measured pressure.

At the same time, the verification reported in the box at the bottom left includes a further condition, namely:

$$\texttt{Des\_Int\_Pr = Des\_Boost\_Pr}$$

That is to say: the intake target pressure coincides with the target boost pressure.

Generally, this condition is always verified if it is not required the so-called "boost reserve", which will be discussed below. This boost reserve condition is completely optional and therefore both the second condition being checked (Des_Int_Pr = Des_Boost_Pr) and the fourth switch SW4 described below are optional.

Evidently the signal representing the target intake pressure is calculated as a function of the torque required from the engine according to a known procedure.

As regards the Intk_Pr_Ctrl controller, it receives an error signal as input. The input error to the Intk_Pr_Ctrl controller is given by the difference between the output of a third switch SW3 and the signal representing the pressure measurement at the intake manifold.

Switch SW3 allows you to select between the following two inputs

- Des_Int_Pr, i.e. the signal representing the target (or desired) pressure for the intake manifold,
- Meas_Boost_Pr, i.e. the signal representing the measured boost pressure.

In the same operating conditions described above, the controller is arranged to receive as input the error calculated as the difference between the signal representing the measured boost pressure and the signal representing the measured intake pressure, as the switch SW3 lets the Meas_Boost_Pr signal for the same condition reported in the bottom left panel of Figure 1.

It is clear that this error is always positive, as the throttle valve generates such a pressure drop that the error can never be cancelled. Therefore, the controller forces the throttle valve to open fully.

Advantageously, the throttle valve is brought fully open without bypassing the relevant controller.

In essence, the pressure error in permanent steady state is zero at the intake manifold, as the boost controller acts directly through it, controlling the intake pressure and the throttle valve is completely open, maximizing efficiency.

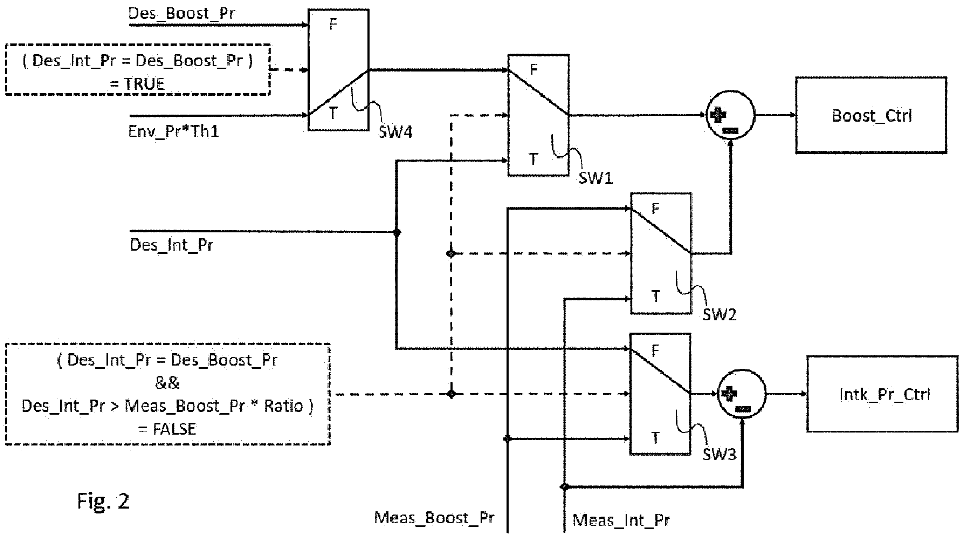

Figure 2 shows a second operating condition, typical of when the engine runs at idle and in any case at a load for which the pressure required at the intake manifold is lower than atmospheric pressure.

In these conditions the pressure required from the intake manifold is lower than the ambient or atmospheric pressure and therefore the compressor is defined as "non-operational", even if it is rotating.

Well, figure 2 differs from figure 1 only in that the condition reported in the bottom left box is not verified.

In particular, it turns out that

$$(Des\_Int\_Pr > Meas\_Boost\_Pr * Ratio ) = FALSE$$

This means that all switches switch to the F condition, i.e. false.

According to Figure 2, the boost controller Boost_Ctrl operates on quantities related to the boost, while the intake pressure controller Intk_Pr_Ctrl operates on quantities related to the intake manifold. This means that the two controllers are decoupled and work in a "traditional" way.

However, the boost controller input is given by the error between the signal representing the ambient pressure increased by a positive threshold Th1 and the measurement of the boost pressure. Since the compressor is "non-operational", this implies that the error is certainly positive, therefore, the wastegate valve is brought to complete closure. This ensures that the entire flow of exhausted gas passes through the turbine, reducing turbo-lag to a minimum if the target pressure, well above atmospheric pressure, at the intake manifold needs to be increased as quickly as possible.

The throttle valve controller, however, receives an input error given by the difference between the signal representing the target pressure at the intake manifold and the signal representing the pressure measured at the intake manifold.

It can be observed that in figure 2, all switches SW1 - SW3 are on F, while switch SW4 is on T.

In fact, in these operating conditions, i.e. when the engine runs at idle or in any case at very low rotation speed, no boost reserve is required and therefore the condition

$$Des\_Int\_Pr = Des\_Boost\_Pr$$

It is verified, therefore True.

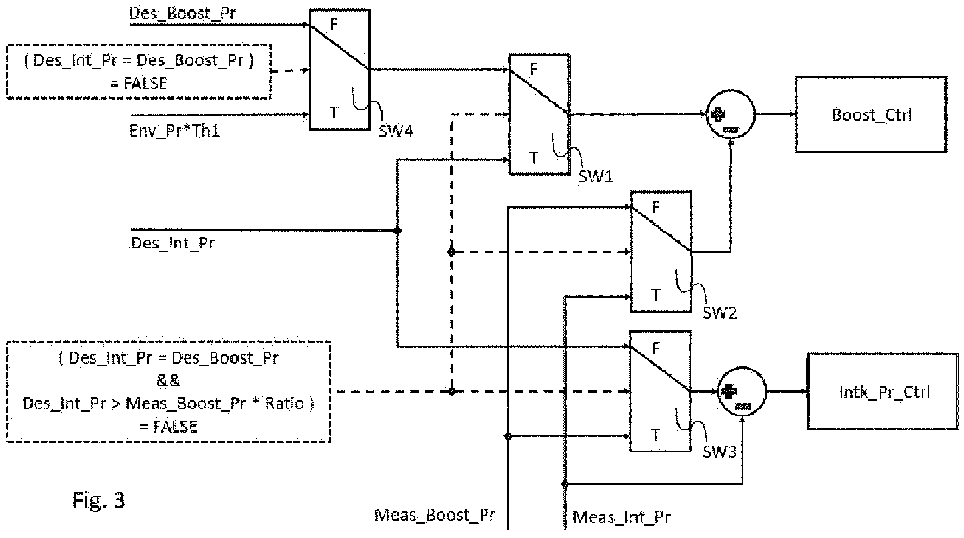

According to a preferred variant of the invention it can be provided that in certain operating conditions, for example when a sports mapping is activated, there is a so-called boost reserve. Figure 3 represents this completely optional operating condition.

So here is the second condition

$$Des\_Int\_Pr = Des\_Boost\_Pr$$

It is no longer verified, therefore False and therefore the fourth switch SW4 switches to the F input which corresponds to Des_Boost_PR which indicates the signal representing the target boost pressure.

Evidently, to do this it is not possible to keep the throttle valve fully open, as it must regulate the air entering the engine, as there is a significant difference between the desired boost pressure and the desired intake pressure.

It is clear that the control scheme of this operating mode in figure 3 is very similar to that of figure 2, as the two controllers Boost_Ctrl and Intk_Pr_Ctrl are decoupled from each other.

However, the boost control must receive an input error different from the one obtained in the diagram of figure 2. To obtain the boost reserve it is necessary that the error is given by the difference between the signal representing the target boost pressure and the signal representing the measured boost pressure.

Therefore, this time the increased ambient pressure is not considered but an appropriately calculated target pressure. The target boost pressure can be obtained for example as a function of the target pressure at the intake manifold or in absolute terms.

In the first case, the target boost pressure can be set as 10 or 20% of the target pressure at the intake manifold, while in the second case as an absolute increase value, for example 100 or 200 mbar. In any case it depends on the possibility of increasing the pressure without increasing the mass flow rate through the compressor while keeping away from its surge condition.

For example, we can consider the following inequality:

$$Des\_Boost\_Pr >= Des\_Int\_Pr + Th2$$

According to this inequality, the target boost pressure is greater than or equal to the desired boost pressure increased by a second pressure threshold Th2.

In any case, it is equivalent to introduce multiplicative thresholds, for example Env_Pr*Th1 in figure 1, and summative thresholds such as Des_Boost_Pr >= Des_Int_Pr + Th2.

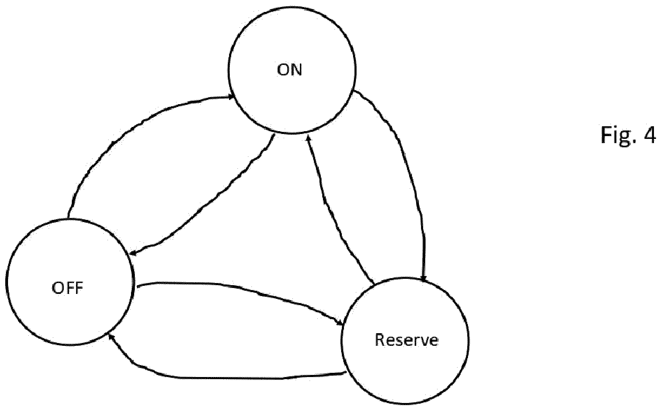

It can be noted that, whatever the control strategy, the two controllers Bosst_Ctrl and Intk_Pr_Ctrl are always active. In this way there is no reason to insert logic that activates one and deactivates another or that generally opens the throttle in certain conditions or not in others. It should be underlined, with reference to figure 4, that with the four switches and the conditions indicated which determine their switching it is possible to pass indiscriminately from one of the three configurations to the other two directly without having to first pass through an intermediate condition.

For this purpose, the state diagram of figure 4 is shown according to which ON represents the state corresponding to figure 1, in which the turbocharger is considered operational ON; OFF represents the state corresponding to figure 2, in which the turbocharger is considered inoperative OFF; Reserve indicates the state corresponding to figure 3, in which the turbocharger is operational and controlled to ensure a boost reserve.

In the case where the wastegate is actuated pneumatically, through an electro-actuated three-way valve, there is a range of pressure values between the atmospheric pressure value and a predetermined value above the atmospheric pressure value in which it is not possible work with the wastegate. In this condition the wastegate remains open regardless of the control implemented. We are therefore in the condition of a non-operational compressor, in other words, in the operational condition managed by the diagram in figure 2.

In this case, in which the valve is pneumatically actuated, it is important to specify the following behavior of the wastegate valve: it is closed when the engine is off or running at idle. As the pressure in the intake manifold increases, the force of the exhaust gases pushing against the wastegate valve increases and this therefore opens although it is controlled to close.

Therefore, part of the exhaust gas passes through the wastegate valve and another part passes through the turbine. The enthalpy is however sufficient to drive the turbine and the related compressor in rotation at a speed for which the boost pressure exceeds the atmospheric pressure. At a certain point, this pressure value is sufficient to balance the pressure generated by the exhaust gases and therefore the wastegate valve is operated towards closure through the electro-actuated three-way valve.

Therefore in conditions in which the boost pressure is between the atmospheric pressure value and a preestablished pressure threshold, it is not possible to control the boost pressure through the relating controller. It means that it is not possible to transition to the ON state of figure 1 and Reserve of figure 3. In this case, in fact, the pressure control at the intake manifold can only be achieved through the throttle valve.

Consequently, as long as it is in this pressure range, it is not possible to implement the scheme of figure 1 to control the intake pressure via the wastegate valve and in the same way it is not possible to control the wastegate valve to generate boost reserve.

Therefore, there is a substantial difference in control strategy when the wastegate valve is actuated electrically or via a pneumatic valve.

For this reason it is advisable to appropriately calibrate the pressure threshold Th1 depending on the type of wastegate valve implemented, in general such that the value of Env_Pr*Th1 falls within the aforementioned range.

Thanks to the present invention, regardless of the type of wastegate valve implemented, the Boost_Ctrl and Intk_Pr_Ctrl controls are always operational and never bypassed. This implies extremely predictable and reliable behavior of the control system. In addition, it is not necessary to modify the control scheme based on the wastegate valve implemented, as it is sufficient to intervene on two parameters, namely the Ratio and Th1 thresholds.

The present invention can advantageously be carried out by means of a computer program which includes coding means for carrying out one or more steps of the method, when this program is executed on a computer. It is therefore understood that the scope of protection extends to said computer program and further to computer readable means comprising a recorded message, said computer readable means comprising program coding means for carrying out one or more steps of the method, when said program is run on a computer.

Constructive variations to the non-limiting example described are possible, without departing from the scope of protection of the present invention, including all the equivalent embodiments for a person skilled in the art, to the contents of the claims.

From the above description, the person skilled in the art is able to realize the object of the invention without introducing further construction details.

**Claims**

1. Method for charging control of a supercharged Otto cycle engine (E) supercharged by a turbocharger (TC) comprising

   - a turbine (TB) arranged on an exhaust manifold (EM) of the engine and equipped with a wastegate valve (WG) arranged to bypass the turbine,
   - a compressor (C) operationally connected to an intake manifold (IM) of the engine,
   - a throttle valve (TV) located on the intake manifold to control a intake pressure downstream of the throttle valve,
   - a first pressure sensor (PI), named as "intake sensor" arranged immediately downstream of the throttle valve, according to an air flow circulation direction,
   - a second pressure sensor (PB), named as "boost sensor" arranged immediately upstream of the throttle valve valley, according to said direction of circulation of the air flow, the method comprising a first procedure, when the turbocharger is judged operational, comprising:
   - Full opening of the throttle valve e
   - Control of the intake pressure by adjusting the wastegate valve,

   Wherein said regulation of the wastegate valve is carried out by means of a first controller (Boost_Ctrl) arranged to receive at input a signal representative of a "first error" given by the difference between

   + a signal representing a target intake pressure (Des_Int_Pr) e
   + a signal representative of a measured intake pressure (Meas_Int_Pr).

2. A method according to claim 1, wherein said signal representative of the measured intake pressure is generated by a first pressure sensor (PI).

3. Method according to claim 1 or 2, wherein said complete opening of the throttle valve is achieved by means of a second controller (Intk_Pr_Ctrl) arranged to receive at input a signal representative of a "second error" given by the difference between

   + a signal representing a measured boost pressure (Meas_Boost_Pr), generated by a second pressure sensor (PB) located immediately upstream of the throttle valve, and
   + a signal representative of a measured intake pressure (Meas_Int_Pr).

4. Method according to any one of the preceding claims in which said first and second controllers operate continuously as a function of said first and second errors, respectively.

5. Method according to any of the previous claims, in which said turbocharger is judged active when the relevant compressor is able to express a boost pressure greater than an ambient pressure (Env_Pr).

6. A method according to any of the preceding claims 3 - 5, further comprising a second procedure, when the turbocharger is judged to be inoperative, comprising:

   - Complete closure of the wastegate valve e
   - Intake pressure control via the throttle valve,

   in which said regulation of the intake pressure is carried out by means of the second controller (Intk_Pr_Ctrl) arranged to receive as input the signal representing said "first error".

7. Method according to claim 6, in which said complete closure of the wastegate valve is achieved by means of the first controller (Boost_Ctrl) arranged to receive at input the signal representing a "third error" given by the difference between

   + a signal representing an ambient pressure (Env_PR) preferably increased by a predetermined threshold (Th1) and
   + a signal representing a measured boost pressure (Meas_Boost_Pr).

8. Method according to any of the preceding claims 3 to 7, further comprising a third procedure, when the turbocharger is deemed operational and a boost reserve is required comprising:

- Throttle valve control based on a signal representing a torque request from the engine,
- Control of the wastegate valve in order to guarantee a boost pressure greater than the intake pressure,
in which the first controller (Boost_Ctrl) is arranged to receive as input the signal representing a "fourth error" given by the difference between

+ a signal representing a target boost pressure value (Des_Boost_PR) e
+ a signal representative of a measured boost pressure value (Meas_Boost_Pr), via said second pressure sensor (PB),

and the second controller (Intk_Pr_Ctrl) is arranged to receive the signal representing the said "first error" as input.

9. Method according to any one of claims 6 to 8, wherein a transition between said first, second and third procedures is performed by means of switches (SW1, SW2, SW3, SW4) of the signals so as to generate said first, second, third and fourth mistake.

10. Otto (E) cycle engine supercharged by a turbocharger (TC) comprising

- a turbine (TB) arranged on an exhaust manifold (EM) of the engine and equipped with a wastegate valve (WG) arranged to bypass the turbine,
- a compressor (C) operationally connected to an intake manifold (IM) of the engine,
- a throttle valve (TV) located on the intake manifold to control a intake pressure downstream of the throttle valve,
- A first pressure sensor (PI) arranged on the intake manifold immediately downstream of the throttle valve and a second pressure sensor (PB) arranged on the intake manifold immediately upstream of the throttle valve (TV),
- processing means (ECU) arranged to control said throttle valve and said wastegate valve (WG), and arranged to acquire signals representative of pressure values generated by said first and second pressure sensors and in which the processing means are configured to carry out all the steps of any of claims 1 to 8.

11. A computer program comprising instructions for causing the processing unit (ECU) of claim 10 to implement the method of claim 1.

12. A computer readable medium having stored the program of claim 11.

13. Vehicle comprising the Otto (E) cycle engine according to claim 10.

Fig. 1

Des_Boost_Pr

( Des_Int_Pr = Des_Boost_Pr )
= TRUE

Env_Pr*Th1

F

T

SW4

F

T

SW1

Boost_Ctrl

Des_Int_Pr

F

T

SW2

( Des_Int_Pr = Des_Boost_Pr
&&
Des_Int_Pr > Meas_Boost_Pr * Ratio )
= TRUE

F

T

SW3

Intk_Pr_Ctrl

Meas_Boost_Pr

Meas_Int_Pr

Fig. 2

Fig. 3

Fig. 4

Fig. 5

| | Europäisches Patentamt European Patent Office Office européen des brevets | **EUROPEAN SEARCH REPORT** | Application Number EP 23 21 4318 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/322876 A1 (PAILLARD JEROME ET AL) 12 November 2015 (2015-11-12) | 1-7,9-13 | INV. F02D41/00 F02B37/18 F02D9/02 |
| Y | * abstract *; figures * * paragraphs [0027], [0028], [0036], [0042] - [0049] * ----- | 8 | |
| Y | US 2019/136747 A1 (XU SHUONAN ET AL) 9 May 2019 (2019-05-09) | 8 | |
| A | * abstract *; figures * * paragraphs [0016] - [0018], [0023] - [0028] * ----- | 1-7,9-13 | |
| X | US 2017/037786 A1 (FABIEN PHILIP ANDREW ET AL) 9 February 2017 (2017-02-09) | 1-5,10, 11 | |
| A | * abstract *; figures * * paragraphs [0020], [0083] * ----- | 6-9 | |
| X | US 2014/260241 A1 (JANKOVIC MRDJAN J; BUCKLAND JULIA H) 18 September 2014 (2014-09-18) | 1-5, 10-13 | TECHNICAL FIELDS SEARCHED (IPC) |
| A | * abstract *; figures 1,4-6 * * paragraphs [0026], [0033] * ----- | 6-9 | F02D F02B |

The present search report has been drawn up for all claims

| Place of search | Date of completion of the search | Examiner |
|---|---|---|
| The Hague | 26 March 2024 | Döring, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 4318

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2024

| Patent document cited in search report | | Publication date | Patent family member(s) | | Publication date |
|---|---|---|---|---|---|
| US 2015322876 | A1 | 12-11-2015 | CN | 104854324 A | 19-08-2015 |
| | | | EP | 2935828 A1 | 28-10-2015 |
| | | | FR | 3000136 A1 | 27-06-2014 |
| | | | RU | 2015129571 A | 25-01-2017 |
| | | | US | 2015322876 A1 | 12-11-2015 |
| | | | WO | 2014095544 A1 | 26-06-2014 |
| US 2019136747 | A1 | 09-05-2019 | CN | 111212968 A | 29-05-2020 |
| | | | EP | 3707360 A1 | 16-09-2020 |
| | | | US | 2019136747 A1 | 09-05-2019 |
| | | | WO | 2019094263 A1 | 16-05-2019 |
| US 2017037786 | A1 | 09-02-2017 | CN | 106438068 A | 22-02-2017 |
| | | | DE | 102016114397 A1 | 09-02-2017 |
| | | | RU | 2016130939 A | 01-02-2018 |
| | | | US | 2017037786 A1 | 09-02-2017 |
| US 2014260241 | A1 | 18-09-2014 | CN | 104047742 A | 17-09-2014 |
| | | | DE | 102014204232 A1 | 18-09-2014 |
| | | | RU | 145314 U1 | 20-09-2014 |
| | | | US | 2014260241 A1 | 18-09-2014 |

EPO FORM P0459

For more details about this annex : see Official Journal of the European Patent Office, No. 12/82